Europäisches Patentamt

European Patent Office

Office européen des brevets

(11) Publication number: **0 069 282**
**B1**

# (12) EUROPEAN PATENT SPECIFICATION

(45) Date of publication of patent specification: **28.05.86**

(21) Application number: **82105567.0**

(22) Date of filing: **24.06.82**

(51) Int. Cl.⁴: **A 01 J 25/11, A 01 J 25/12,**
**A 23 C 19/06, F 26 B 5/04**

(54) Method of and apparatus for cooling a wet particulate food product, especially a cheese type food product.

(30) Priority: **03.07.81 NZ 197609**

(43) Date of publication of application:
**12.01.83 Bulletin 83/02**

(45) Publication of the grant of the patent:
**28.05.86 Bulletin 86/22**

(84) Designated Contracting States:
**AT BE CH DE FR GB IT LI LU NL SE**

(56) References cited:
EP-A-0 006 290
DE-A-2 807 725
DE-C- 220 834
FR-A-2 226 803
FR-A-2 295 694
US-A-3 041 153
US-A-3 296 709

NORDISK MEJERIINDUSTRI, vol. 4, no. 4, 1977,
pages 143-145, 147, (NO); A.OTERHOLM:"Whey
cheese and its production"

(73) Proprietor: **NATIONAL DAIRY ASSOCIATION OF**
**NEW ZEALAND LIMITED**
**69 Beach Road**
**Auckland 1 (NZ)**

(72) Inventor: **Whelan, Edmund Kerran**
**40 Rathlin Street Blockhouse Bay**
**Auckland 7 (NZ)**

(74) Representative: **Brown, John David et al**
**FORRESTER & BOEHMERT Widenmayerstrasse**
**4/I**
**D-8000 München 22 (DE)**

(56) References cited:
**DAIRY AND ICE CREAM FIELD, no. 157, no. 2,**
**1974, pages 51-56, 56, (GB);"Automatic**
**cheddaring highlights advances at giant**
**zumbrota plant"**

Courier Press, Leamington Spa, England.

# Description

This invention concerns improvements in and relating to food processing, and more particularly concerns processing of a wet particulate food product.

The invention has particular application in relation to the manufacture of cheese, and especially cheddar cheese. However it is to be appreciated that reference in the specification to this particular type of manufacture is by way of example only of one preferred alternative of the application of the methods according to the present invention.

It has been found that cheese manufactured according to present methods initially has unfavourable characteristics when it is released from the vacuum process station. In particular, the cheese product is of a temperature of approximately 35° celsius and is crumbly and fragile.

Thus, it has been found necessary to leave the cheese in a hoop over night under continuous mechanical pressure before it is removed and vacuum packed into appropriate plastics bags and cardboard containers. The cheese when so packaged is then stored in a cooling station for a period of approximately 48 hours to be gradually cooled to a storage temperature of 16° celsius at which it may be further handled. The time involved in these processing has been considered disadvantageous for mechanised production and it has also necessitated the use of a large number of hoops for containing the cheese products during this time.

It is therefore considered that it would be advantageous to provide a faster and more efficient method of processing and/or cooling wet particulate food products, and particularly cheese type food products. It is considered that the advantages of this system could include one or more of the following:

(a) The product temperature could be reduced prior to pressing so as to discourage non-starter lactgo baccilli from developing to large numbers within 24 hours of processing;

(b) The apparaus used in manufacture could be subject to a faster turnaround from a continuous cycle of application;

(c) Energy demand in cooling storage stations would decrease since the product would be entering at a lower temperature, particularly during the summer months,

(d) The formation of a more solidified cheese type product which is capable of further handling and which took less time to press would result in other savings including savings in power, labour, associated equipment costs, maintenance and building utilisation.

It has been known in food technology to reduce temperature using flash cooling techniques, wherein a deep vacuum is drawn around an object to be cooled. The vacuum causes the boiling point of the liquid within the product to be lowered according to a definite law related to pressure, so that the object in the vacuum cools to a degree related to the depth of vacuum. This technique is known as a deep vacuum or a flash cooling process. For example, EP—A—0006290 discloses a method and apparatus for vacuum cooling moisture containing foodstuffs.

It is an object of this invention to provide a method, of processing particulate material (being cheese in one preferred embodiment), which goes at least some way towards overcoming or minimising disadvantages which have previously been encountered in relation to known methods of processing particulate food material.

According to one aspect of this invention there is provided a method of processing a cheese type food product, including applying a deep vacuum of between 0—38 torr to a wet particulate food material for up to 15 minutes; the food material then being returned to atmospheric pressure by immediate release of said vacuum.

According to a further aspect of this invention there is provided a method of processing a cheese type food product, including the steps of:

(a) loading wet particulate food material into a hoop or container (10);

(b) pre-pressing (30) the food material by mechanical pressure;

(c) applying a deep vacuum (60) between 0—38 torr to the material for a period of up to 15 minutes;

(d) turning the material to atmospheric pressure by immediate release of said vacuum;

(e) re-pressing (70) the material.

According to a further aspect of this invention there is provided a method of processing a cheese type food product, including the steps of:

(a) loading wet particulate food material into a vacuum chamber (130);

(b) applying a deep vacuum of between 0—38 torr for a period of up to 15 minutes, to said material in said chamber (130);

(c) maintaining said particulate material in a discrete form within said vacuum chamber (130) during the application of said deep vacuum;

(d) thereafter returning said material to atmospheric pressure by immediate release of said vacuum;

(e) loading said particulate material into a hoop;

(f) pressing said particulate material.

According to a further form of this invention there is provided an apparatus for processing a cheese type food product, including:

(a) a filling station (20) for loading particulate curd material into a hoop or container (10);

(b) pre-pressing station (30) adapted to prepress the particulate curd material within said hoop or container (10), by mechanical press apparatus (31);

(c) a vacuum station (60) including a sealable vacuum chamber (61) adapted to receive and house one or more hoops or containers (10) of particulate curd material;

(d) a vacuum pump (63) being provided in conjunction with said vacuum chamber (61) and being adapted to apply a vacuum to said vacuum chamber (61) between 0—38 torr for a period of up to 15 minutes;

(e) said apparatus being adapted so as to permit a return to atmospheric pressure by immediate release of said vacuum;

(f) a re-pressing station (70), including means adapted to press the particulate curd material within said one or more hoops or containers (10).

According to a yet further form of this invention there is provided an apparatus for processing a cheese type food product, including a vacuum chamber (30, VC1—VC4), having an inlet (161) for discrete particulate curd material; said vacuum chamber being associated with vacuum means (166) adapted to apply a deep vacuum of between 0—38 torr to said particulate curd material within said vacuum chamber, for a period of up to 15 minutes; said vacuum chamber including stirrer means (151) to maintain said particulate curd material in a discrete form; said apparatus being adapted so as to permit a return to atmospheric pressure by immediate release of said vacuum; an outlet (163) being provided and extending from said vacuum chamber to a hoop filling station (115, 1P—12P); press means being provided to press said material to provide said cheese type product.

Objects will become apparent from the following description which is given by way of example only of preferred embodiments of the invention as shown in the drawings, in which:

Figure 1: is a schematic representation of a food processing apparatus according to one preferred embodiment of the invention.

Figure 2: is a schematic representation of a food processing apparatus according to an alternative preferred embodiment of the invention.

Figure 3: is a cross-sectional representation of a vacuum chamber according to one embodiment of an apparatus for performance of the alternative (per Figure 2) preferred embodiment of the invention.

In one aspect it will be appreciated that the invention proposes a method of processing a food product or material, which in one preferred embodiment of the invention is particulate curd to be processed into a cheese type food product.

Furthermore, reference in this specification to "flash cooling" will be generally appreciated as the reduction of the temperature of the material by boiling water out of such material at a reduced pressure.

A deep vacuum as referred to in this specification will be generally recognised as a vacuum pressure of between 28.5 inches Hg (38 torr) and absolute vacuum pressure 30 inches Hg (or 0 torr). In the preferred embodiments of the method according to the present invention it is proposed that the vacuum pressure be applied to the product for a predetermined time so as to boil off the excess water in the product and thus preferably reduce its temperature to between 22° and 27° Celsius. By way of example it will be appreciated that at a vacuum pressure of 21—24 Torr, the boiling temperature of water is 23° to 25° celsius.

Further, the predetermined time as herein defined may range up to approximately 15 minutes. In preferred embodiments of the invention the vacuum pressure is rapidly increased up to the desired pressure of between 21—24 Torr maintained for what is considered to be the required time of approximately 5 minutes. The vacuum pressure will initially boil off any excess water, and then, as it is maintained, effect the cooling of the curd product to the desired temperature. The vacuum pressure is then immediately released so that during the change back to atmospheric pressure, the structure of the cheese is maintained and no internal expansion occurs within the product.

The invention will now be described with reference to two particular methods of manufacture of food type products, and in particular cheddar cheese type products.

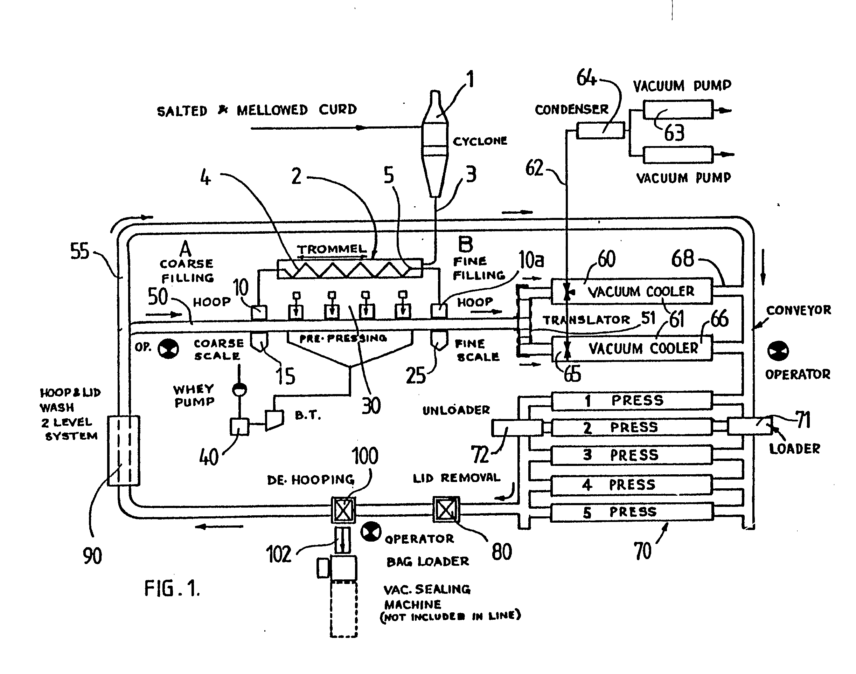

The first preferred embodiment of the manufacture of cheese type products is disclosed in Figure 1 of the drawings to which reference will now be directed. In particular, there is disclosed a plurality of stations in a cheese making process.

Firstly, the salted and mellowed curd is transported from the salting station in the direction indicated in the schematic diagram, to a cyclone receiving device generally indicated by arrow 1, which is adapted to receive the wet particulate curd product.

The cyclone apparatus is capable of supplying curd to a trommel generally indicated by arrow 2 through a conduit 3. The trommel of the invention may be provided with a substantially horizontal axis and preferably includes a primary auger 4, and a secondary auger 5 adapted to feed small quantities of curd to the other end of the filling station in the manner to be described.

In the preferred embodiment of the invention the trommel apparatus may be mounted on a support frame so that the entire apparatus is rotatable with the augers 4 and 5 being fixably positioned about the horizontal axis of said trommel, although in alternative embodiments it is of course envisaged that the auger apparatus may be rotatable within a fixed trommel housing.

The preferred embodiment of the invention provides that the trommel apparatus is rotatable in either direction about its horizontal axis, and furthermore provides that the primary auger 4 will transport the curd product within the trommel in the direction of the course filling station marked A.

The secondary auger apparatus 5 is adapted to transport curd apparatus in a direction of fine filling station B during the reverse rotation of said trommel apparatus.

The apparatus then provides for a transport system to transport cheese making hoops and hoop bottom to the course filling station A by means of continuous conveyor 50. A secondary conveyor 55 preferably provided above and to the side of primary conveyor 50 carries the top of the cheese making hoop in a secondary loop so as to avoid the filling station.

The preferred embodiment of the invention provides an operator or mechanical apparatus adjacent the course weighing station A to assemble the hoop and hoop bottom and to align the hoop on the conveyor. When the hoop 10 reaches the course weigh scale at an appropriate time as determined after inspection by the process control system, the hoop is raised clear of the conveyor and its weight is transferred by link mechanism on to the weigh scale. At this point tare weight is taken and then programmed into a weighing system microprocessor memory circuit.

The primary auger 4 of the trommel type filling apparatus is then caused to operate and feed curd into the hoop by way of supply conduit 6 until the predetermined weight (for example $20^+$Kg) has been fed into the hoop, at which time the weight control circuit stops the screw conveyor drive motor.

The action of the link mechanism is then reversed and the filled hoop is returned to the conveyor transport apparatus 50.

The hoop or container which is now filled with an approximate amount of curd is transported to the prepressing station 30. The prepressing station according to preferred embodiments provides for a plurality of pneumatic presses generally indicated by arrow 31, each of which comprises a reaction frame with a super structure supporting a pneumatic ram to which is connected a platten. The transport control information selects which one of the four presses is vacant and signals a transverse roller conveyor to raise the hoop clear of the conveyor and a pneumatic ram moves the hoop on to a powered secondary conveyor beneath the pressing apparatus.

The invention then provides for a prepress using the pressing device, wherein a pressure of 1 bar is applied for up to 5 minutes and preferably for approximately 1 minute, thereafter the hoop is then removed from the press by reversal of the secondary conveyor, and then returned to the primary conveyor.

It is also preferred that during the actual pressing operation, a reaction frame be raised through the secondary conveyor to take the force of the pressing on the underside of the hoop or container in which the curd is positioned.

The hoop then continues along the primary conveyor until it reaches the final filling station marked B. A further link mechanism is provided to raise the hoop clear of the primary conveyor 50 and to transfer the weight to the fine scale 25.

It has been found that some whey and particularly liquid is removed during the pre-pressing of the contents of the hoop so that the weight at this point will be less than the required weight of the product. Accordingly, the fine screw conveyor 5 is operable to feed a fine stream of curd through conduit 16 into the hoop to make up the weight to the predetermined amount. The weight on the fine scale will be very accurately determined and when the weight is correct the secondary screw conveyor is caused to stop.

It is to be appreciated that according to preferred embodiments, the processing system is programed to provide continuous calculation and adjustment for correct weight and to also attend to standard deviation trends on final products. This provides for a continuous and automatic adjustment of the weight of the product produced by the process of the invention.

The hoop is then returned from the fine filling station to the primary conveyor is then transported to the vacuum cooling station, and once again, the control functions of the process are programed to provide for the hoops to be transported to an appropriate vacuum cooler. In preferred embodiments of the invention at least two vacuum cooler apparatus may be provided to accommodate the continuous processing of filled hoops. The appropriate translator which is preferably continually operable is generally indicated by arrow 51.

The vacuum cooling station is generally indicated by arrow 60 and includes a pair of vacuum cooling chambers 61 each consisting of a horizontally mounted cylindrical vessel, equipped with conveying apparatus preferably including slides and appropriate guide members to accommodate the required number of hoops. The apparatus further provides a thruster loading device (not shown) at the input end 65 of each press, with a corresponding out-loading system being provided adjacent the other end 66 of the vacuum cooling chamber. Furthermore, each chamber is fitted with a hinged air tight door at each end, and is provided with a valve system 67 in communication with a vacuum conduit 62. In the preferred embodiment of the invention the vacuum conduit 62 is in communication with a condenser 64, to which at least one and preferably a pair of vacuum pumps 63 may be connected. It will be appreciated that the vacuum pumps of the present invention are of suitable size to enable flash cooling techniques, and particularly a deep vacuum to be applied to a vacuum chamber 61.

In one form of the invention the vacuum may be drawn upon the hoops of curd product within the chamber for a predetermined period which may be up to 15 minutes, and in other embodiments, approximately 5 minutes. Thereafter, the vacuum pressure will be immediately released so that during the change back to atmospheric pressure, the structure of the cheese will be maintained and no internal expansion will occur within the product. It is considered that this will appropriately lower the temperature of the curd product to a desired temperature of between 22 and 26 degrees and preferably about 24 degrees celsius. It is also considered that an open area of product of at least 15 to 20 percent should be provided to which the vacuum can be applied. In the preferred embodiment of the invention this is facilitated by leaving the lids off the hoops (or containers) to provide an open surface area. This feature of the invention is considered to be important to provide as low as possible resistance against vapour passing out of the product within the hoop.

Furthermore, it is considered that it may be advantageous in certain embodiments to provide for hoops which have perforated sides and base walls to assist in the application of the vacuum to the product within the hoop. In preferred embodiments of the invention these perforations may be provided for by way of vertical grooves in the sides of the hoop or with other small regularly spaced holes in the sides of the hoop.

The arrangement is such that following the application of the vacuum to the first series of product, a further series of hoops arrive at the vacuum vessel so that the process is repeated by the thruster loading device pushing the new load of hoops into the chamber so that as each fresh hoop is pushed into the vacuum chamber, a vacuumised cool hoop is pushed out, and so on until the vacuum chamber has been re-filled with fresh hoops.

The hoops then proceed on the conveyor transport system, the arrangement being such that the adjacent positioning of the primary and secondary conveyor enables the lids to be fitted on to the hoops by an operator positioned as shown in the schematic drawings. The closed hoops or containers then proceed to the pressing station generally indicated by arrow 70 where they enter a loading system wherein each hoop is placed on its side so that the lid or top of the hoop abuts against the base of the preceding hoop in the batch positioned in the continuous transport system within the press frame. The arrangement is such that the hoops are appropriately positioned to enter into the press frame apparatus and are then pushed into the entry end of the press frame so that a corresponding pressed hoop is pushed out of the other end to provide a continuous advancing system of pressed hoops which pass through the pressing station in a period of what may be up to an hour, and which in the preferred embodiments of the invention will be approximately 30 minutes pressing time.

In the preferred embodiment of the invention the pressing station includes a plurality of mechanical secondary press means 70 adapted to provide pressing for the cheese product within the hoop for approximately 30 minutes at 1 bar. The pressing station further includes mechanically operable loading devices 71, 72 positioned adjacent the entry, and the exit of the mechanical presses.

It will be appreciated that a cheese product has now been created from the curd product initially provided in the hoop or container, and that the cheese product is now capable of passing through the conveyor system to be removed from the hoop, for further packaging. This can be performed by any known apparatus, and that the following description relates to one preferred embodiment only of the apparatus according to the invention.

In particular, the arrangement is such that the conveyor transports the hoops to a lid removal station 80 which provides a lid removal machine including a ram beneath the conveyor lifting the hoop clear of the conveyor and bringing the frame of the hoop against the retaining device which in preferred embodiments clamps the hoop to prevent its further vertical movement. An elongate vertical ram provided with a gripping device on its lower end is then provided to descend and remove the lid from the hoop by retraction of the ram. The arrangement is such that the vertical ram is provided on a carriage system which is adapted to move horizontally along the line of the primary conveyor. Having removed the lid from the hoop, the carriage moves the ram with the lid held in an upraised position until it reaches the first end of the upper or secondary conveyor 55 whereupon it releases the lid which now travels along this conveyor to the washing station generally indicated by arrow 90.

In turn, the hoop from which the lid has been removed continues along the lower primary conveyor 50 until it reaches the dehooping station 100.

The dehooping machine in the preferred embodiment of the invention consists of a cradle device which grips the frame of the hoop. The cradle is itself mounted in a frame which is capable of being raised to thus lift the hoop. When the hoop is well clear of the conveyor the cradle apparatus is adapted to rotate through 180 degrees to invert the hoop and the cheese product therein.

The invention then provides that during the inversion of the hoop, a cantilevered slidable table 102 may be adapted to move over the primary conveyor immediately below the inverted hoop. Thereafter, a vertically mounted ram fitted to an extension of the cradle frame operates to push the cheese product from the hoop onto the slidable table. The slidable table 102 then retracts taking the cheese product to the bagging station, whilst the cradle operation is reversed so that the hoop is lowered back on to the primary conveyor and continues along to the washing station 90.

It will be appreciated that the arrangement of the dehooping station is such that the hoop bottom remains on the cheese and is thus provided as the top of the cheese when it is emptied on to the slidable table. Therefore an operator is provided as shown in the schematic representation to remove the hoop bottom from the cheese and place it behind the hoop on the primary conveyor, so that the bottom returns to the washing apparatus immediately behind the corresponding hoop.

The arrangement is then such that the block of cheese product is adapted to be moved from the slidable table 102 into the bag loader 110 wherein it is placed in a plastics bag and vacuum sealed before being placed into an appropriate carton.

It has been found by way of experiment that the apparatus of the present invention yields a cheese product of firm shape with a well knitted and balanced composition. The finish of the cheese has been found to be of consistent quality with corners well set up and edges well defined. Thus, the cheese produced by the method according to the present invention is capable of being further processed as may be required.

The method of the invention will also be described with reference to a second preferred embodiment of manufacture wherein the deep vacuum techniques of the invention are applied to portions of cheese curd before pressing same into a food product. In this embodiment discrete portions of curd particle are provided as salted and mellowed curd particles having cross-sectional areas of between 1 and 10 square centimeters with proportionate lengths to provide elongate portions.

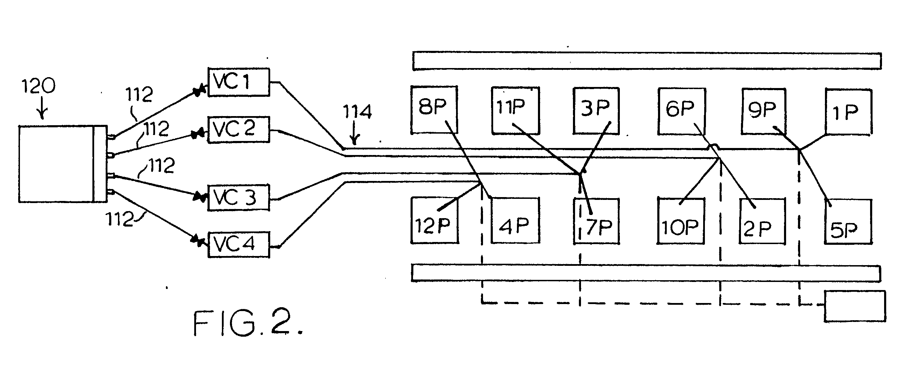

The method of this second preferred embodiment of the invention will be more particularly described with reference to the accompanying drawings, and particularly the schematic representation in Figure 2. In particular, the method of the invention according to one preferred embodiment provides for a distribution station, adapted to distribute product to at least one, and preferably a plurality of vacuum stations, with product subsequently being conveyed to at least one, and preferably a plurality of pressing stations all of which are generally referred to in Figure 2 of the drawings.

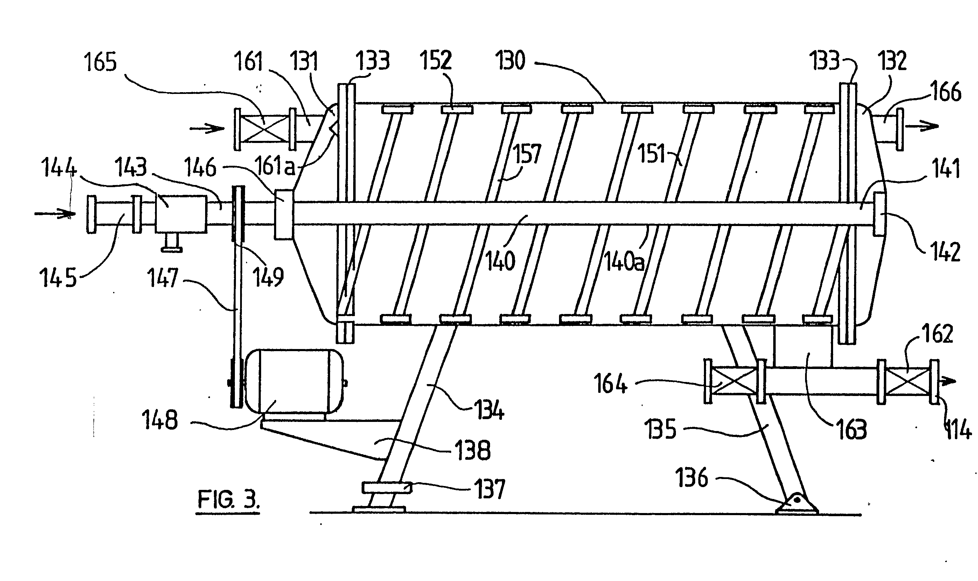

In this embodiment, the discrete portions of curd product are conveyed to a distribution station, which may preferably comprise a vibratory conveyor generally indicated by arrow 120. The vibratory conveyor may in the preferred form of the invention be adapted to direct discrete portions of curd product into a plurality of transport pipes 112 which are connected to a plurality of corresponding vacuum stations generally indicated as VC1—VC4 (inclusive). The vacuum stations are generally indicated by arrow 130 in Figure 3 of the drawings and will be more specifically referred to in Figure 3 of the drawings. However, a preferred embodiment of the invention is such that the vacuum stations provide for the use of deep vacuum techniques to evaporate excess water and to correspondingly reduce the temperature of the curd product. The arrangement is then such that each vacuum station is in communication with at least one, and preferably a plurality of pressing stations (1P—12P), to which the product is conveyed preferably by a vacuum transport system 114.

Thus, by this alternative embodiment of the invention, discrete portions of curd product are subjected to said deep vacuum techniques, before the particle is conveyed to a pressing station and pressed to form a cheese, and preferably a large block of cheese, of a size varying between the conventional hoop size of approximately twenty (20) kilograms, up to a possible large hoop size of approximately three hundred and twenty (320) kilograms.

This embodiment furthermore provides for the efficient processing of curd type products into a cheese. In particular, as shown in the programme referred to in Figure 2 of the preferred embodiment, it is envisaged that it may take approximately six minutes to fill each vacuum chamber 130, (VC1—VC4) preferably on a consecutive basis, with the individual vacuum chambers being filled by vacuum conveying methods from the vibratory conveyor. Thereafter, deep vacuum techniques may be used on the enclosed vacuum chamber so as to boil off excess water at a correspondingly reduced temperature, and effect the flash cooling of the portions of curd product from approximately 35°C to between 20—25°C. It has been found by way of experiment that the time required to attend to this flash cooling may be up to approximately fifteen minutes according to preferred embodiments of the methods of performance of the invention. Thereafter, the cooled portions of curd product are again consecutively processed by being emptied from the vacuum chamber and transported by way of the vacuum transport system to the pressing station 170, for pressing into a cheese (at 1P—12P).

Thus, the preferred embodiment of the method of the present invention provides that a cheese product may be formed from discrete particles of curd having an initial temperature of approximately 35°C, and according to the invention, being formed to provide a cheese having a temperature of say less than 25°C at least within one hour, and possible within approximately thirty minutes from the time of production of the curd type product, a result which would have previously taken up to sixteen hours.

This embodiment of the invention will now be particularly described with reference to the apparatus for performance of the methods of the invention. As described in Figure 3 of the drawings, this embodiment provides a vacuum chamber generally indicated by arrow 130 which is preferably cylindrical in cross-section and is reinforced to withstand high external pressure caused by the vacuum created within the chamber. Further, the chamber is preferably constructed of a cylindrical body portion provided with a flange about either end thereof, with end portions 131 and 132 including corresponding flanges 133 so as to provide an enclosed chamber.

The chamber 3 is provided on a support frame which may generally include a first pair of leg members generally indicated by arrow 135, adjacent one end of the housing, and a second leg member 134 adjacent the other end of the housing. The first pair of leg members 135 may be pivotally mounted on a base 136, with the leg 134 being provided with a load cell indicator 137 which can be used to determine the amount of the product in the vacuum chamber apparatus.

Further, in one preferred embodiment of the invention, the vacuum chamber may be provided with a downward slope of a gradient of approximately 1:10, from its inlet end 131 to its outlet end 132 so as to provide a slope for flow in the bottom of the body portion 130 of the vacuum chamber.

The vacuum chamber further includes a product inlet port 161 from the product line, with an inlet valve 165 being provided therebetween. A vacuum port 166 to which a vacuum line (not shown) may be connected is then provided preferably at the other end of the apparatus.

Further, an outlet port 163 is then provided in the bottom portion of the vacuum chamber, adjacent the other end 132 thereof. The arrangement is such that the outlet 163 is in communication with primary valve 162, which is connected to the product line 114, through which the product may be transported to the pressing stations 170 as shown in Figure 2 of the drawings.

The vacuum chamber apparatus further includes a centrally disposed shaft generally indicated by arrow 140 which in preferred embodiments of the invention may be coaxial with the body portion 130 of the vacuum chamber apparatus, and extends into said vacuum chamber from its end 131, to adjacent its end 132. The shaft 140 may preferably be a hollow shaft, with closed end 141 being mounted in bearing 142. The inlet end 143 of the shaft may be housed in a rotary seal 144, with an inlet valve 145 being provided adjacent said rotary seal. Further, a vacuum seal 146 may be provided between said shaft 140, and the inlet end 131 of the vacuum chamber. The invention then provides for a drive means generally indicated by arrow 147 and preferably including a chain, belt or other continuous drive means to end 143 of the hollow shaft. In one preferred embodiment, the drive means can be motor 148 driving pulley means 149 provided about the end 143 of the shaft between the rotary seal and the vacuum seal referred to herein. In preferred embodiments of the invention, the drive means 148 may be positioned on a support frame 138 secured to the leg 134 of the vacuum chamber apparatus.

The shaft 140 is provided with a plurality of radial stirrer members, preferably provided at an angle relative to the perpendicular axis of the shaft member 140. A plurality of said stirrer members are generally indicated by arrow 151 in the drawings, and may in preferred embodiments of the invention include flange or scraper portions 152 on the outer ends of the stirrers, in the same plane as, and thereby adapted to rotate about the inside surface of, the vacuum chamber 130. The stirrer members 51 therefore provide a helical means adapted for the movement of the discrete particles of curd type product from the inlet end to the outlet end of the said vacuum chamber apparatus. Further, said stirrer members 151, and a conical baffle 161a together provide for deflection of the curd type product when it is initially drawn by vacuum through the inlet port 161.

The shaft 140 may also be provided with a plurality of radial outlet ports generally indicated by arrow 140a. The arrangement is such that a cleaning fluid may be introduced under pressure through valve 145 so as to pass through the hollow pipe 140, and outwardly through the radially positioned ports 140a to spray cleaning fluid through the apparatus as required, to clean the vacuum chamber apparatus after a period of use. In this arrangement, outlet valve 162 may be closed, and cleaning fluid may optionally pass through the outlet 163, to return valve 164, rather than through the product line.

The arrangement of the apparatus is such that the vacuum line may be used to draw portions of curd product along transport pipe 112, and through the inlet port 161 of the vacuum chamber until the load cell indicator 137 indicates that the vacuum chamber has been filled to its appropriate capacity. In preferred embodiments of the invention, this capacity may provide for an amount of curd and whey to provide a resultant (large) cheese of approximately three hundred and twenty kilograms.

As the product is drawn into the vacuum chamber apparatus, the stirrer members 151 are slowly rotated so as to initially deflect the portions of curd and to rotate them about the chamber so as to maintain the discrete nature of the curd portions. The stirrer members 151 maintain said stirring action until the entire load has been cooled and emptied through the outlet 163.

When the set load has been reached, the system automatically seals all openings and a deep vacuum is drawn according to the method of the invention. The rate of cooling is accelerated by the stirrer action of the blade portions 151 maintaining the discrete nature of the curd portions, and permitting vapour pressures to be kept nominally in balance. The apparatus provides for temperature sensor means for assessing the temperature of the curd portions so that when the deep vacuum has cooled the curd product to the correct temperature the vacuum pressure is released and the curd is removed from the drum through the outlet port 163. The removal of the product is preferably effected by means of a low pressure vacuum transport system that conveys the curd to the pressing station 170 indicated in Figure 2 of the drawings.

Now, the invention provides that the portions of curd which have been cooled to a temperature of between 20—25°C and preferably 23—22°C, are distributed into hoop(s) which may either be a conventional twenty kilogram cheese making hoop(s), or preferably one large cheese making hoop of a capability of approximately three hundred and twenty kilograms. The curd portions are evenly distributed into the hoop by means of a particle distributor and filling of the hoop stops when the curd level reaches a level which is predetermined by sensing means at the pressing station. Alternatively, the filling will of course stop when the load cell on the vacuum chamber indicates that the vacuum chamber has been completely emptied.

Following filling into a hoop or hoops the curd is pressed in a similar press to the secondary press described with reference to the first preferred embodiment of the invention, for the same secondary press period of approximately 30 minutes at 1 bar pressure.

Thus, by the method and apparatus of the present invention it is possible to achieve satisfactory processing and pressing of cheese curd into a cheese that will provide a finish and analysis compatible to cheese pressed for sixteen hours overnight, with the entire time of processing from the production of the curd portion being less than sixty minutes in duration. Further, the method and apparatus achieves the objectives of fast cooling the cheese so as to reduce the rate of increase of non-starter lactobaccilli. The method and apparatus of the invention provides for efficient and continuous use of the apparatus, and particularly the cheese making hoops which may be re-used after a period of only sixty minutes, instead of previous systems which necessitated the overnight pressing of the product within the hoop so as to reduce its temperature.

It has also been found that this results in a cooled block which is also capable of being packaged. Furthermore, it has been found that this invention has particular application in relation to the manufacture of large block type cheeses of up to say 320 kg weight. It has been found that the use of conventional techniques whereby the product is filled into a hoop before application of deep vacuum, are unsatisfactory for large hoops since the curd product within the hoop has a tendency to seal off a significant portion of the venting area by the static pressure of the curd head within the container. This provides for difficulties in obtaining adequate temperature drop throughout the body of the product, which is required to obtain a cheese product having properties capable of permitting its further processing.

Furthermore, the fast cooling of the temperature of the cheese curd provides that the cheese which is produced for storage is at a lower temperature and thereby produces a lower energy demand on cool store facilities.

Thus, by this invention there is described methods of processing wet particulate food product, and particularly a curd type product for production of cheese, and especially cheddar type cheese wherein the application of deep vacuum techniques according to the methods of the present invention provides for at least two methods of manufacture of cheese as herein defined.

Finally, it will be appreciated that the invention has been described by way of example only, and that modifications alterations and additions may be made to the method and apparatus for the performance of the method of the invention without departing from the scope of the invention.

**Claims**

1. A method of processing a cheese type food product, including applying a deep vacuum of between 0—38 torr to a wet particulate food material for up to 15 minutes; the food material then being returned to atmospheric pressure by immediate release of said vacuum.

2. A method of processing a cheese type food product as claimed in claim 1, including the steps of:
(a) loading particulate food material into a hoop or container (10);
(b) pre-pressing (30) the food material by mechanical pressure;
(c) applying a deep vacuum (60) of between 0.38 torr to the material for a time of up to 15 minutes;
(d) returning the material to atmospheric pressure by immediate release of said vacuum
(e) re-pressing (70) the material.

3. A method of processing a cheese type food product as claimed in claim 1, including the steps of:
(a) loading particulate food material into a vacuum chamber (130);
(b) applying a deep vacuum of between 0—38 torr for a period of up to 15 minutes, to said material in said chamber (130);
(c) maintaining said particulate material in a discrete form within said vacuum chamber (130) during the application of said deep vacuum;
(d) thereafter returning said material to atmospheric pressure by immediate release of said vacuum.
(e) loading said particulate material into a hoop;
(f) pressing said particulate material.

4. A method as claimed in any one of the preceding claims wherein the deep vacuum is applied for a sufficient time to reduce the temperature of the material to a temperature of between 22°C and 26°C.

5. A method as claimed in claim 4, wherein the deep vacuum is between 12 and 38 torr and is applied for approximately 5 minutes.

6. A method as claimed in claim 5, wherein the deep vacuum is between 20 and 25 torr, the material being reduced to a temperature of between 22°C and 23°C.

7. A method as claimed in any one of the preceding claims wherein at least 20% of the surface of the material is exposed to the deep vacuum.

8. A method as claimed in any one of the preceding claims wherein the material is in discrete portions.

9. A method as claimed in claim 2, wherein the deep vacuum (60) of between 0—38 torr is applied to the material for 15 minutes, to form a cheese at a temperature of between 22°C and 26°C.

10. A method as claimed in claim 3, wherein the material is pressed for a period of up to 30 minutes.

11. A method as claimed in claim 3, wherein the material is particulate curd material, said material being salted, mellowed and provided in a discrete form having portions of a size approximately 10 cubic centimeters, before being loaded in said vacuum chamber.

12. A method as claimed in any one of the preceding claims, wherein the particulate food material is curd.

13. A method as claimed in any one of the preceding claims for the processing of a cheese type food product.

14. Apparatus for processing a cheese type food product, including:

(a) a filling station for loading particulate curd material into a hoop or container (10);

(b) a pre-pressing station (30), adapted to prepress the particulate curd material within said hoop or container (10), by mechanical press apparatus (31);

(c) a vacuum station (60) including a sealable vacuum chamber (61) adapted to receive and house one or more hoops or containers (10) of particulate curd material;

(d) a vacuum pump (63) being provided in conjunction with said vacuum chamber (61) and being adapted to apply a vacuum to said vacuum chamber (61) between 0—38 torr for a period of up to 15 minutes;

(e) said apparatus being adapted so as to permit a return to atmospheric pressure by immediate release of said vacuum;

(f) a re-pressing station (70), including means adapted to press the particulate curd material within said one or more hoops or containers (10).

15. Apparatus for processing a cheese type food product, including a vacuum chamber (30, VC1—VC4) having an inlet (161) for discrete particulate curd material; said vacuum chamber being associated with vacuum means (166) adapted to apply a deep vacuum of between 0—38 torr to said particulate curd material within said vacuum chamber, for a period of up to 15 minutes; said vacuum chamber including stirrer means (151) to maintain said particulate cured material in a discrete form; said apparatus being adapted so as to permit a return to atmospheric pressure by immediate release of said vacuum; an outlet (163) being provided and extending from said vacuum chamber to a hoop filling station (115, 1P—12P); press means being provided to press said material to provide said cheese type product.

**Revendications**

1. Procédé de traitement d'une denrée alimentaire du type fromage, comportant l'application d'un vide poussé, compris entre 0 et 38 torrs, pendant une durée pouvant atteindre jusqu'à quinze minutes, à une denrée alimentaire granuliforme humide, cette dernière étant ensuite ramenée à la pression atmosphérique par relâchement immédiat du vide.

2. Procédé de traitement d'une denrée alimentaire du type fromage, selon la revendication 1, comportant les étapes suivantes:

(a) chargement de la denrée alimentaire granuliforme dans un moule ou conteneur (10);

(b) précompression (30) de la denrée, par pression mécanique;

(c) application d'un vide poussé (60), compris entre 0 et 38 torrs, à la denrée pendant une durée pouvant atteindre quinze minutes;

(d) retour de la denrée à la pression atmosphérique par relâchement immédiat du vide;

(e) recompression (70) de la denrée.

3. Procédé de traitement d'une denrée alimentaire du type fromage, selon la revendication 1, comportant les étapes suivantes:

(a) chargement de la denrée alimentaire granuliforme dans une chambre à vide (130);

(b) application d'un vide poussé, de 0 à 38 torrs, pendant une période pouvant aller jusqu'à quinze minutes, à la denrée dans la chambre (130);

(c) maintien de la denrée granuliforme sous une forme morcelée dans la chambre à vide (130) pendant l'application du vide poussé;

(d) après cela, retour de la denrée à la pression atmosphérique, par relâchement immédiat du vide;

(e) chargement de la denrée granuliforme dans un moule;

(f) compression de la denrée granuliforme.

4. Procédé selon l'une quelconque des revendications précédentes, dans lequel le vide poussé est appliqué pendant un temps suffisant pour abaisser la température de la denrée à une température comprise entre 22°C et 26°C.

5. Procédé selon la revendication 4, dans lequel le vide poussé est compris entre 12 et 38 torrs et est appliqué pendant environ 5 minutes.

6. Procédé selon la revendication 5, dans lequel le vide poussé est compris entre 20 et 25 torrs, la denrée étant ramenée à une température comprise entre 22°C et 23°C.

7. Procédé selon l'une quelconque des revendications précédentes, dans lequel au moins 20 % de la surface de la denrée est exposée au vide poussé.

8. Procédé selon l'une quelconque des revendications précédentes, dans lequel la denrée est en morceaux.

9. Procédé selon la revendication 2, dans lequel le vide poussé (60), compris entre 0 et 38 torrs, est appliqué à la denrée pendant quinze minutes, pour former un fromage à une température comprise entre 22°C et 26°C.

10. Procédé selon la revendication 3, dans lequel la denrée est comprimée pendant une période pouvant aller jusqu'à 30 minutes.

11. Procédé selon la revendication 3, dans lequel la denrée est du caillé granuliforme, cette denrée étant salée, mûrie et présentée sous une forme morcelée, comportant des morceaux dont la taille est d'environ 10 centimètres cubes, avant d'être chargée dans la chambre à vide.

12. Procédé selon l'une quelconque des revendications précédentes, dans lequel la denrée alimentaire granuliforme est du caillé.

13. Procédé selon l'une quelconque des revendications précédentes, pour traiter un produit alimentaire du type fromage.

14. Dispositif pour traiter une denrée alimentaire du type fromage, comportant:

(a) un poste de remplissage pour charger du caillé granuliforme dans un moule ou conteneur (10);

(b) un poste de compression préalable (30), adapté pour précomprimer le caillé granuliforme dans le moule ou conteneur (10), au moyen d'un dispositif (31) de pressage mécanique;

(c) un poste de vide (60), comportant une chambre à vide (61) pouvant être fermée de manière étanche et apte à recevoir et loger au moins un moule ou conteneur (10) de caillé granuliforme;

(d) une pompe à vide (63), prévue en liaison avec la chambre à vide (61) et adaptée pour appliquer à cette chambre à vide (61) un vide compris entre 0 et 38 torrs, pendant une période pouvant atteindre 15 minutes;

(e) le dispositif étant apte à permettre un retour à la pression atmosphérique par relâchement immédiat du vide;

(f) un poste de recompression (70), comportant des moyens aptes à comprimer le caillé granuliforme dans le ou les moules ou conteneurs (10).

15. Dispositif pour traiter une denrée alimentaire du type fromage, comportant une chambre à vide (30, VC1—VC4), ayant une entrée (161) pour du caillé granuliforme en morceaux; cette chambre à vide étant associée à des moyens de vide (166) aptes à appliquer un vide poussé, compris entre 0 et 38 torrs, au caillé granuliforme dans la chambre à vide, cela pendant une période pouvant atteindre 15 minutes, la chambre à vide comportant des moyens agitateurs (151) pour maintenir le caillé granuliforme sous une forme morcelée; ce dispositif étant apte à permettre un retour à la pression atmosphérique par relâchement immédiat du vide; tandis qu'il est prévu une sortie (163) qui s'étend de la chambre à vide jusqu'à un poste (115, 1P—12P) de remplissage de moule; des moyens de compression étant prévus pour comprimer le caillé, afin de produire la denrée alimentaire du type fromage.

**Patentansprüche**

1. Verfahren zum Verarbeiten eines käseartigen Nahrungsmittelproduktes, welches das Anlegen eines Mittelvakuums von zwischen 0 bis 38 Torr an ein feuchtes, aus Partikeln bestehendes Nahrungsmittelmaterial für bis zu 15 min einschließt, wobei das Nahrungsmittelmaterial danach durch sofortiges Aufheben besagten Vakuums wieder auf Atmosphärendruck gebracht wird.

2. Verfahren zum Verarbeiten eines käseartigen Nahrungsmittelproduktes nach Anspruch 1, welches die Schritte einschließt:

(a) Einfüllen von aus Partikeln bestehendem Nahrungsmittelmaterial in eine Form oder einen Behälter (10);

(b) Vorpressen (30) des Nahrungsmittelmaterials durch mechanischen Druck;

(c) Anlegen eines Mittelvakuums (60) von zwischen 0 bis 38 Torr an das Material für einen Zeitraum von bis zu 15 min;

(d) Zurückbringen des Materials auf Atmosphärendruck durch sofortiges Aufheben besagten Vakuums;

(e) Nachpressen (70) des Materials.

3. Verfahren zum Verarbeiten eines käseartigen Nahrungsmittelprodukts nach Anspruch 1, welches die Schritte einschließt:

(a) Einfüllen von aus Partikeln bestehendem Nahrungsmittelmaterial in eine Vakuumkammer (130);

(b) Anlegen eines Mittelvakuums von zwischen 0 bis 38 Torr für einen Zeitraum von bis zu 15 min an besagtes Material in besagter Kammer (130);

(c) Halten von besagtem aus Partikeln bestehenden Material in einer diskreten Form innerhalb besagter Vakuumkammer (130) während des Anlegens von besagtem Tiefvakuum;

(d) danach Zurückbringen besagten Materials auf Atmosphärendruck durch sofortiges Aufheben besagten Vakuums;

(e) Einfüllen von besagtem aus Partikeln bestehenden Material in eine Form;

(f) Pressen des besagten aus Partikeln bestehenden Materials.

4. Verfahren nach einem der vorangehenden Ansprüche, wobei das Mittelvakuum für einen genügenden Zeitraum angelegt wird, um die Temperatur des Materials auf eine Temperatur von zwischen 22°C und 26°C abzusenken.

5. Verfahren nach Anspruch 4, wobei das Mittelvakuum zwischen 12 und 38 Torr liegt und für etwa 5 min angelegt wird.

6. Verfahren nach Anspruch 5, wobei das Mittelvakuum zwischen 20 und 25 Torr liegt und das Material auf eine Temperatur von zwischen 22°C und 23°C abgesenkt wird.

7. Verfahren nach einem der vorangehenden Ansprüche, wobei wenigstens 20 % der Oberfläche des Materials dem Mittelvakuum ausgesetzt werden.

8. Verfahren nach einem der vorangehenden Ansprüche, wobei das Material in diskreten Portionen vorliegt.

9. Verfahren nach Anspruch 2, wobei das Mittelvakuum (60) von zwischen 0 bis 38 Torr für 15 min an das Material angelegt wird, um einen Käse bei einer Temperatur von zwischen 22°C und 26°C zu bilden.

10. Verfahren nach Anspruch 3, wobei das Material für einen Zeitraum von bis zu 30 min gepreßt wird.

11. Verfahren nach Anspruch 3, wobei das Material aus Partikeln bestehendes Käsebruchmaterial ist, besagtes Material gesalzen, gereift und in einer diskreten Form mit Portionen einer Größe von ungefähr 10 ccm bereitgestellt wird, bevor es in besagte Vakuumkammer eingefüllt wird.

12. Verfahren nach einem der vorangehenden Ansprüche, wobei das aus Partikeln bestehende Nahrungsmittelmaterial Käsebruch ist.

13. Verfahren nach einem der vorangehenden Ansprüche zur Verarbeitung eines käseartigen Nahrungsmittelprodukts.

14. Vorrichtung zur Verarbeiten eines käseartigen Nahrungsmittelprodukts, welche einschließt:

(a) eine Füllstation zum Einfüllen von aus Partikeln bestehendem Käsebruchmaterial in eine Form oder einen Behälter (10);

(b) eine Vorpreßstation (30), die geeignet ist, das aus Partikeln bestehende Käsebruchmaterial in besagter Form oder besagtem Behälter (10) mit einer mechanischen Preßvorrichtung (31) vorzupressen;

(c) eine Vakuumstation (60), die eine verschließbare Vakuumkammer (61) einschließt, die geeignet ist, eine oder mehrere Formen oder Behälter (10) von aus Partikeln bestehenden Käsebruchmaterial aufzunehmen und unterzubringen;

(d) eine Vakuumpumpe (63), die in Verbindung mit besagter Vakuumkammer (61) bereitgestellt und geeignet ist, in besagter Vakuumkammer (61) ein Vakuum zwischen 0 bis 38 Torr für einen Zeitraum von bis zu 15 min zu erzeugen;

(e) wobei besagte Vorrichtung dazu geeignet ist, durch sofortiges Aufheben besagten Vakuums eine Rückkehr zu Atmosphärendruck zu erlauben;

(f) eine Nachpreßstation (70), die eine Einrichtung einschließt, die dazu geeignet ist, das aus Partikeln bestehende Käsebruchmaterial in besagter einer oder besagten mehreren Formen oder Behältern (10) zu pressen.

15. Vorrichtung zum Verarbeiten eines käseartigen Nahrungsmittelprodukts, welche eine Vakuumkammer (30, VC 1 bis VC 4) mit einer Einlaßöffnung (161) für diskretes, aus Partikeln bestehendes Käsebruchmaterial einschließt; wobei besagte Vakuumkammer mit einer Vakuumeinrichtung (166) verbunden ist, die dazu geeignet ist, bei besagtem aus Partikeln bestehenden Käsebruchmaterial in besagter Vakuumkammer für eine Zeitdauer von bis zu 15 min ein Mittelvakuum von zwischen 0 bis 38 Torr zu erzeugen; wobei besagte Vakuumkammer eine Rühreinrichtung (151) einschließt, um besagtes aus Partikeln bestehendes Käsebruchmaterial in einer diskreten Form zu halten; wobei besagte Vorrichtung dazu geeignet ist, durch sofortiges Aufheben besagten Vakuums eine Rückkehr zu Atmosphärendruck zu erlauben; wobei eine Auslaßöffnung (163) vorgesehen ist und sich von besagter Vakuumkammer zu einer Formfüllstation (115, 1 P bis 12 P) erstreckt; wobei eine Preßeinrichtung zum Pressen besagten Materials vorgesehen ist, um besagtes käseartiges Produkt zur Verfügung zu stellen.

FIG. 1.

FIG.2.

FIG. 3.